# EUROPÄISCHE PATENTSCHRIFT

(11) **EP 0 471 712 B1**
(45) Veröffentlichungstag und Bekanntmachung des Hinweises auf die Patenterteilung: **27.04.1994**
(21) Anmeldenummer: 90906993.2
(22) Anmeldetag: 09.05.1990
(51) Int. Cl.: D21F 3/08, D21G 1/02, F16C 13/00

(54) **WALZE ZUR DRUCKBEHANDLUNG VON WARENBAHNEN**
ROLLER FOR PRESSURE TREATMENT OF WEBS
CYLINDRE POUR TRAITEMENT EN PRESSION DE BANDES

(30) Priorität: 12.05.1989 DE 3915508
(43) Veröffentlichungstag der Anmeldung: 26.02.1992
(73) Patentinhaber: CERASIV GmbH INNOVATIVES KERAMIK-ENGINEERING, D-73207 Plochingen (DE)
(72) Erfinder: FUCHS, Karl-Dieter, D-7333 Ebersbach/Fils (DE); FRIESEN, Wolfram, D-4054 Nettetal-Lobberich (DE)
(74) Vertreter: Schulz, Wilfried, Dipl.-Ing.
(86) Internationale Anmeldenummer: EP9000745
(87) Internationale Veröffentlichungsnummer: WO9013706

(56) Entgegenhaltungen:
- BE-A- 826 083
- DE-A- 1 909 960
- DE-A- 2 818 437
- DE-A- 3 528 588
- GB-A- 2 062 808
- US-A- 3 737 962

## Beschreibung

Die Erfindung betrifft eine Walze gemäß dem Oberbegriff des Anspruches 1. Walzen dieser Art weisen einen Durchmesser von 0,3 bis 1,50 m bei einer Länge von bis zu 9 m auf, der Walzenmantel besteht dabei bei Preßwalzen üblicherweise aus Granit, bei harten Kalanderwalzen aus Spezialguß mit z. T. verchromter Oberfläche. Granit ist, wie bekannt, ein Erstarrungsgestein, das ein körniges, gesprenkeltes Aussehen aufweist und meistens aus 1 bis 4 mm großen, fest zusammengebackenen Kristallen von Quarz, Feldspat, Glimmer Sowie einer Vielzahl kleinerer und erst mikroskopisch erkennbarer Bestandteile, wie Magnesit und Eisenglanz, besteht. Aus der Literatur sind für Granit die nachfolgenden Materialkennwerte bekannt.

| Wesentliche Materialkennwerte: | |
|---|---|
| Zugfestigkeit | 10 - 20 N/mm² |
| Druckfestigkeit | 160 - 240 N/mm² |
| Druckschwellfestigkeit | ca. 110 N/mm² |
| E-Modul | 15.000 - 71.000 N/mm² |
| Querzahl | 0,2 |
| Dichte | 2,62 - 2,85 g/m² |
| spez. Wärmekapazität | 710 - 840 J/kgK |
| Wärmeleitzahl | 2,9 - 7,5 W/mK |
| thermische Längenänderung | 5 - 9 m/mK |

Dabei hat sich in letzter Zeit herauskristallisiert, daß die kritischste Größe dieser Materialkennwerte die Zugfestigkeit ist, die bei allen Gesteinen sehr niedrig liegt. Auch ist die Prüfung der Zugfestigkeit kompliziert, da Form, Probengröße und Belastungsart in starkem Maß in die Meßwerte eingehen und zusätzlich bei der Betrachtung der Eigenschaften gesehen werden muß, daß Granit als Naturprodukt eine große Schwankungsbreite aufweist und lokale Fehlstellen in der Struktur nie auszuschließen sind. Mit zunehmender Größe des Walzendurchmessers und zunehmender Geschwindigkeit der Papiermaschinen näherte sich die auftretende Fliehkraft dem Grenzbereich und es sind bereits die ersten Zerstörungen von Granitwalzen bekanntgeworden, die nicht nur zu empfindlichen Störungen in der Produktion führten, sondern zusätzlich eine hohe Gefahr für das Bedienungspersonal an der Maschine darstellten.

Um die bekannten Nachteile zu vermeiden, ist bereits vorgeschlagen worden, Preßwalzen einzusetzen, deren Walzenmantel aus Kunststoff und diesem als Füllstoff beigemischten pulverisierten Stein besteht - EP-PS 53 804 -.

Ebenso ist bekannt, den Zylindermantel aus einer Mischung aus Metallpulver und einem Pulver aus anorganischen Stoffen zu bilden, wobei als Metalle Stahl, Nickel, Chrom, Titan, Kupfer oder Bronze und als anorganische Stoffe Quarz, Feldspat, Aluminiumoxid, Zirkonoxid, Titanoxid, Titankarbid, Siliziumkarbid, Magnesiumoxid, Siliziumnitrid, Chromoxid, Wolframkarbid, Niokarbid, Vanadiumkarbid, Chromkarbid oder deren Mischungen eingesetzt werden - DE-OS 35 46 343.

Weiterhin wurde vorgeschlagen, den Mantel der Preßwalze als gehärteten Körper einer hydraulischen Zusammensetzung auszuführen, d. h. aus Zementen und mineralischen Materialien aufzubauen und auszuhärten, so daß eine Druckfestigkeit von nicht weniger als 1.000 kp/cm² und eine Dichte von nicht weniger als 2,5 erreicht wird. Als Zemente wurden dabei Portlandzemente, Ölzemente, Kieselsäurezemente und Flugaschezemente sowie Hochofenzemente vorgeschlagen, als mineralische Materialien Alit (Ca₃SiO₅), Hochofenschlacke, Flugasche, ferner Teilchen von zerkleinerten Steinen, wie Granit, Quarz, Feldspat, wobei außer Wasser auch noch Additive, Aktivatoren usw. zugefügt wurden - DE-OS 36 17 316 -.

Bekannt ist ferner, auf einen aus Metall bestehendem Walzenmantel eine Beschichtung aufzubringen, wobei die Beschichtung aus Chrom oder nicht rostendem Stahl besteht, dem ein oder mehrere Komponenten eines keramischen Stoffes zugesetzt sind. Als keramische Zusatzwerkstoffe wurden dabei Al₂O₃, SiO₂, TiO₂, ZrO₂, SiC, TiC, Cr₃C₂_{,} WC, NbC, vC, Cr₇C₃ vorgeschlagen - DE-OS 36 21 154.

Ein weiterer Vorschlag für die Herstellung einer Preßwalze ist in der EP-OS 207 921 enthalten. Gemäß diesem Vorschlag wird auf eine Metallwalze zunächst eine metallische Zwischenschicht mit geringerem Ausdehnungskoeffizienten als ihn der Walzenkörper aufweist, aufgebracht und darauf eine poröse Keramik aufgebracht, wobei beide Vorgänge des Aufbringens auf Plasmabeschichtung oder Flammspritzen beruhen. Die metallische Zwischenschicht wird aufgebracht, um eine möglichst geringe Differenz zwischen dem Ausdehnungskoeffizienten von Keramik und Metall zu erreichen.

In der Praxis haben alle diese Vorschläge jedoch Nachteile, die den Einsatz solcher Walzen teils gar nicht, teils nur in beschränktem Umfange zulassen. So läßt sich beispielsweise durch die Anordnung einer metallischen Zwischenschicht zwischen Keramikbeschichtung und Tragkörper die Wirkung der Wärmeexpansion zwar etwas reduzieren, bei Durchmessern von 1,50 m und darüber und Walzenlängen von über 8 m, wie sie in modernen Papiermaschinen durchaus üblich sind, ergeben sich trotzdem solche Differenzen in der Ausdehnung, daß der Verbund zwischen Keramik und Metall sich löst, was zur Zerstörung der Walze führt. Überschlägig ergibt sich, bezogen auf übliche Walzendurchmesser, übliche Längen und Temperaturunterschiede von bis zu 50 Grad, beim Anfahren der Maschine folgendes:
Bezogen auf den Durchmesser dehnt sich der Metallkern um über 600 µ mehr aus als der Keramikmantel, bezogen auf die Länge ist der Ausdehnungsunterschied ca. 3.500 µ.

Ähnliche Schwierigkeiten entstehen, wenn eine Beschichtung aufgebracht wird, die aus Kunststoffen, ggf. auch aus Metallen und mit diesen vermischten Keramikpulvern besteht. In diesen Fällen löst sich zwar nicht die komplette Beschichtung als Schicht, sondern es lockert sich der Verbund zwischen dem anorganischen Pulver und der Trägerschicht, was zu einem erhöhten Abrieb führt.

Die sogenannten Kunststeinwalzen, die praktisch eine Walze aus Beton darstellen, entsprechend dem Naturprodukt Granit noch am ehesten, weisen aber auch seine Nachteile auf, d. h. die Oberfläche ist nicht gleichmäßig in Bezug auf Kornverteilung und Kornzusammensetzung, da hier wieder Naturprodukte verwandt wurden. Genauso kritisch wie beim Granit ist die Zugfestigkeit, die ausgesprochen niedrig liegt bei gleichzeitig sehr guter Druckfestigkeit. Die Gefahr, daß auch ein Kunststein bei hohen Drehzahlen und großen Durchmessern zerspringt, wie das in der Zwischenzeit bei Granitsteinen vorgekommen ist, ist damit nicht gebannt.

Kalanderwalzen aus Spezialguß bereiten keine Schwierigkeiten bezüglich Festigkeitsoptimierungen, jedoch ist bei dieser Walzenanwendung die Oberfläche des Walzenmantels bezüglich Härte und Mittenrauhwert Rₐ der kritische Punkt, insbesondere dann, wenn Papiere mit abrasiven Füll- oder Streichpigmenten verarbeitet werden sollen.

Der vorliegenden Erfindung liegt damit die Aufgabe zugrunde, bei Aufrechterhaltung der guten Oberflächeneigenschaften des Granitsteines bei Naßpreßwalzen - gute Ablösung des Papiers von der Walze, gute Benetzbarkeit mit Wasser, geringer Verschleiß durch Schaber - die Nachteile des Naturproduktes weitgehend zu vermeiden, insbesondere die Zugfestigkeit zu erhöhen, eine gleichmäßige, reproduzierbare Oberflächenstruktur zu ermöglichen und von den Granitlagerstätten unabhängig zu werden.

Eine weitere Aufgabe besteht darin, Kalanderwalzen mit verbesserter Oberfläche zum Glätten von Papier zur Verfügung zu stellen.

Bei einer gattungsgemäßen Walze wird dieses durch den kennzeichnenden Teil des Anspruchs 1 und die daran anschließenden Unteransprüche gelöst.

Die Verwendung von Sinterkeramik als Material für eine Walze für die Druckbehandlung ergibt gegenüber dem Vorbekannten gleich mehrere Vorteile.
1.
   Es stehen beliebig große Mengen an Ausgangsstoffen zur Verfügung, das Ausgangsmaterial ist also einfach und günstig zu beschaffen.
2.
   Es müssen nicht riesige Blöcke transportiert und bearbeitet werden, um daraus in aufwendiger mechanischer Arbeit einen Walzenmantel zu fertigen.
3.
   Die erforderliche Oberfläche des Walzenmantels ist jederzeit reproduzierbar.
4.
   Die Festigkeit des Walzenmantels ist in allen Bereichen gleich.
5.
   Die chemische Zusammensetzung des Walzenmantels kann den Erfordernissen angepaßt werden. Es handelt sich also nicht um ein Konglomerat von zufällig anwesenden Ausgangsstoffen, wie beim Naturprodukt, sondern durch gezielte Auswahl und gezielte Fertigungsbedingungen läßt sich ein Optimum hinsichtlich Korngröße und chemischem Aufbau sowie Oberflächeneigenschaften erzielen.

Durch die Unterteilung in einzelne Ringe ist nicht nur eine rationelle Fertigung möglich, es ist auch möglich, durch Änderung der Ringzahl Walzen mit unterschiedlichen Längen herzustellen, ohne daß die Form der einzelnen Ringe geändert werden muß.

Bei den bisher eingesetzten Steinwalzen, also bei Walzenmänteln aus Granit wie auch bei harten Kalanderwalzen konnten einzelne Bereiche des Walzenmantels beschädigt werden, so daß es in diesen Bereichen zu Fehlstellen im Papier kam mit der Folge, daß die ganze Walze nachgeschliffen oder sogar ersetzt werden mußte. Mit der jetzt vorliegenden Walzenausgestaltung ist es möglich, Teilbereiche der Walze bei Weiterbenutzung der nicht beschädigten Bereiche zu ersetzen, d. h. einen oder mehrere Ringe auszutauschen, was zu einer erheblichen Kostenreduzierung führt.

Das Merkmal b) des Anspruchs 1 dient zur kraftschlüssigen axialen Vorspannung der einzelnen Ringe, wobei die Vorspannung so gewählt wird, daß ein Klaffen der einzelnen Stoßstellen zwischen den Ringen auch dann vermieden wird, wenn die Walzenachse sich aufgrund von Erwärmung auf Betriebstemperatur in axialer Richtung dehnt.

Bekanntlich ist Keramik nicht auf Zug beanspruchbar. Da bei Preßwalzen mit Liniendrücken bis zu 120 kN/m, bei Kalanderwalzen sogar bis zu 300 kN/m gearbeitet wird, ist der aus den einzelnen Ringen gebildete Walzenmantel auf Biegung durch die Linienlast beansprucht. Erfindungsgemäß sind daher Mittel zwischen Walzenachse und Ringen vorgesehen, die einerseits die Ringe zur Walzenachse koaxial zentrieren und andererseits ihrerseits derart unter Vorspannung stehen, daß die auf den Walzenmantel aufgebrachte Linienlast sicher auf die Walzenachse übertragen werden kann. Damit erfährt der keramische Walzenmantel an der linienförmigen Berührungsstelle mit einer oder mehreren Gegenwalzen nur eine Druckbeanspruchung, die für Keramik bekanntermaßen hervorragend geeignet ist.

Die Oberfläche des durch die einzelnen Ringe gebildeten Walzenmantels wird sowohl durch die zu behandelnde Papierbahn wie auch durch anliegende Reinigungsvorrichtungen, wie z. B. Schaberklingen, beansprucht. Bei Preßwalzen soll die Oberfläche möglichst glatt sein, um dem Reinigungsschaber keinen Angriffspunkt für vorzeitigen Verschleiß, wie er insbesondere bei Verwendung von Monelschabern auftritt, zu bieten. Diese Aufgabe wird durch die kennzeichnenden Merkmale des Anspruchs 2 gelöst.

Um eine optimale axiale Verbindung der einzelnen Ringe miteinander zu erreichen, wird gemäß bevorzugten Ausgestaltungsformen der Erfindung vorgeschlagen, daß der Mittenrauhwert Rₐ der Stirnflächen der Ringe gleich oder kleiner 0,5 ist und eine Ebenheit von weniger als 2 Lichtbanden aufweist und daß die Parallelität der Stirnfläche unterhalb einer Abweichung von 0,01 µm auf 1.000 µm Meßstrecke liegt. Durch die beiden ersten Merkmale ist gewährleistet, daß keine Spalten zwischen den einzelnen Ringen entstehen, wenn diese zum Walzenmantel zusammengefügt werden, d. h., daß auf der Papierbahn sich keine Markierungen bilden, die zu Ausschuß führen würden. Das Merkmal der Parallelität der Stirnflächen gewährleistet, daß der Walzenmantel auch bei großen Walzenlängen die Form eines geraden oder bombierten Zylinders aufweist, d. h., daß die bei der Herstellung des Walzenmantels anfallende Schleifarbeit wesentlich reduziert ist.

Gemäß einer vorteilhaften Ausgestaltung der Erfindung sind die Ringe durch mindestens einen elastischen Zuganker miteinander verbunden, wobei der Zuganker durch die Walzenachse selbst gebildet werden kann.

Es ist erforderlich, daß durch die Walzenflansche erhebliche Druckkräfte auf die Ringe übertragen werden, wenn die Walze Raumtemperatur aufweist. Das ist darauf zurückzuführen, daß die Sinterkeramik einen erheblich geringeren thermischen Ausdehnungskoeffizienten als der Werkstoff der Walzenachse aufweist, d. h. also, daß bei Erwärmung auf Betriebstemperatur sich die Walzenachse wesentlich mehr ausdehnt als die Ringe.

Soll die Walzenachse nicht durch Zugspannungen belastet werden, so kann nach einer weiteren vorteilhaften Ausgestaltung das axiale Spannmittel durch mehrere, mindestens aber drei auf einem Kreisbogen konzentrisch zur Walzenachse angeordnete Zuganker gebildet werden. Diese sind mit den Walzenflanschen kraftschlüssig verbunden und auf Vorspannung eingestellt, damit der aus den einzelnen Ringen gebildete Walzenmantel sicher auch bei Erwärmung der gesamten Walzenkonstruktion zusammengehalten wird. Die Zuganker können in dem Ringraum zwischen Walzenmantel und Walzenachse angeordnet werden, so daß bei den Ringen aus gesinterter Keramik keine besonderen Maßnahmen zur Aufnahme der Zuganker notwendig sind. Daß bei dieser Bauweise die Walzenflansche entsprechend dimensioniert und zumindest ein Walzenflansch auf der Walzenachse frei verschiebbar sein muß, ist für den Fachmann offensichtlich.

Gemäß einer weiteren bevorzugten Ausgestaltung der Erfindung sind die Walzenflansche als Tellerfedern ausgeführt, die in Verbindung mit der weniger elastischen Walzenachse mittels Vorspannung die axialen Druckkräfte auf die den Walzenmantel bildenden Ringe übertragen. Die Tellerfedern werden dabei gemäß üblichen Verbindungsmethoden, z. B. zentrales Gewinde in den Bohrungen der Tellerfedern oder Druckschrauben, mit der Walzenachse kraft- und formschlüssig verbunden.

Die elastischen, nachgiebigen Zentriermittel zur Kompensation der einseitigen Linienlasten können durch mindestens drei regelmäßig radial angeordnete Metallfedern gebildet werden. Als Federbauart ist jede übliche möglich, wie z. B. Spiralfedern, Blattfedern, doppelte Tellerfedern oder Ringfedern, insbesondere gewellte und geteilte Ringfedern zwecks Ausgleich von Wärmedehnungen in radialer Richtung.

Da Federn aus Federstahl korrosionsempfindlich sind, das Walzeninnere aber nicht absolut von Feuchtigkeit freigehalten werden kann, können die elastischen Zentriermittel auch aus gummielastischen Werkstoffen, wie z. B. Hartgummi, bestehen. Diese werden entweder als einzelne Blöcke radial angeordnet, oder es wird ein ganzer Ring aus diesem Material in dem Raum zwischen Walzenmantel und Walzenachse vorgesehen, der zweckmäßigerweise mit Übermaß versehen wird, um nach dem Einfügen in den Ringraum eine Vorspannung auszuüben. Dabei hat es sich als zweckmäßig erwiesen, die gummielastischen Blöcke bzw. Ringe an die keramischen Ringe anzuvulkanisieren. Die gummielastischen Ringe können selbst schlauchförmig ausgebildet und mit einem kompressiblen Medium gefüllt sein.

Zur Fixierung der metallischen Federn in ihrer radialen Position können sowohl an der Zentralwalze wie auch an der inneren Mantelfläche Vorrichtungen wie z. B. Zapfen, Ausnehmungen o. ä. vorgesehen werden, die die Federn an ihren jeweiligen Krafteinleitungsflächen festlegen. Es ist aber auch möglich, die elastischen Zentriermittel an den konzentrisch im Ringraum zwischen Walzenmantel und -achse angeordneten axialen Zugankern zu befestigen.

Eine weitere Ausführungsform der elastischen, nachgiebigen Zentriermittel sieht vor, daß diese durch pneumatisch oder hydraulisch betätigte Stützelemente gebildet werden, die sich zwischen Walzenmantel und -achse radial erstrecken und mit einem Druckspeicherausgleichsystem verbunden sind. Derartige Systeme sind von den Durchbiegungseinstellungswalzen, sog. S-Walzen, allgemein bekannt, wie z. B. DE-A-27 07 657.

Eine weitere vorteilhafte Ausgestaltung der Erfindung sieht vor, daß die Ringe in den Stirnflächen mindestens drei über den Umfang verteilte Bohrungen aufweisen. Diese Bohrungen dienen dazu, Zuganker aufzunehmen und dadurch die Ringe gegeneinander zu verspannen. Als Zuganker können dabei Konstruktionen analog den üblichen Dehnschrauben eingesetzt werden, wobei durch Wahl der Vorspannung beim Zusammenbau sicherzustellen ist, daß die gesamte Ausdehnung der Dehnschrauben bei Erwärmung nicht dazu führt, daß der Zusammenhalt der Ringe gefährdet wird.

Weitere vorteilhafte Ausgestaltungen der Erfindung sehen vor, daß die beiden in den Außenbereichen des Walzenmantels angeordneten Außenringe an ihren äußeren Stirnseiten Ansätze tragen, wobei diese Ansätze vorzugsweise kegelförmig sind. An diesen Ansätzen greifen die Walzenflansche an. Aufgrund der unterschiedlichen Wärmeausdehnung ist es nicht möglich, eine direkte Innenzentrierung der Walze vorzunehmen, d. h. den Walzenmantel mit einem Innendurchmesser auf dem Außendurchmesser der Walzenachse zu befestigen, da eine solche Konstruktion den Walzenmantel sprengen würde. Die Erfindung sieht daher vor, daß eine Außenzentrierung erfolgt, d. h. die Walzenflansche übergreifen die an den äußeren Stirnseiten der Außenringe angebrachten Ansätze. Dadurch, daß diese Ansätze kegelförmig gehalten sind und dementsprechend auch der Walzenflansch als hohler Kegel ausgeführt ist, ergibt sich eine Gleitbewegung bei der Erwärmung zwischen Walzenflansch und Kegelfläche des Ansatzes, wodurch stets ein sicherer Formschluß zwischen Walzenflansch und Außenstirnseite des Walzenmantels erreicht wird.

In den Fällen, wo die Ringe nur eine relativ geringe Wandstärke aufweisen, sieht die Erfindung vor, daß die äußeren Stirnseiten der Außenringe als solche kegelstumpfförmig ausgestaltet sind, womit auch bei geringen Ringwandstärken die Vorteile der Außenzentrierung erreicht werden.

Eine bevorzugte Ausgestaltung der Erfindung sieht vor, daß die Ringe in den Stirnflächen Bohrungen zur Aufnahme von Sprengstiften oder Spannhülsen nach DIN 7346 aufweisen. Durch diese Ausgestaltung ergibt sich ein großer bearbeitungstechnischer Vorteil, da gegenüber anderen Konstruktionen kein vollflächiges Schleifen der Ringe erforderlich ist, d. h. die Innenfläche des Ringes nicht bearbeitet werden muß. Die Bohrungen selbst können sowohl als Durchgangslöcher als auch als Sackloch ausgeführt werden und sind über den Umfang der Ringe gleichmäßig verteilt. Die Bohrungen gestatten ein schnelles Zusammensetzen der Ringe zum Walzenmantel.

Sind die Bohrungen als Durchgangsloch ausgeführt, so können gemäß einer weiteren bevorzugten Ausgestaltung der Erfindung die Zuganker mit Spiel durch die Spannhülsen hindurchgeführt werden. Zusätzliche Bohrungen zur Aufnahme der Zuganker sind dann nicht erforderlich.

Als Keramikmaterial für die gesinterten Ringe hat sich die übliche Ingenieurkeramik aus oxidischen oder nichtoxidischen Werkstoffen bewährt, sofern diese eine ausreichend hohe Dichte und damit geringe Porosität, eine genügende Härte nach Vickers, Druckfestigkeit, Biegebruchfestigkeit und Beständigkeit gegen saure und alkalische Medien aufweist.

Derartige geeignete Keramiken werden beispielsweise beschrieben in

| a) oxidischen Keramiken | |
|---|---|
| Al₂O₃ | DE-A-29 09 291 |
| ZrO₂ | DE-A-23 07 666 |
| ZrO₂-verstärktes Al₂O₃ | DE-A-27 44 700 |
| ZrO₂-verstärktes Al₂O₃ | DE-A-30 22 213 |

| b) nichtoxidische Keramiken | |
|---|---|
| Siliziumkarbid | DE-A-26 24 641 |
| " | DE-C-37 33 730 |
| Siliziumnitrid | DE-A-30 29 831 |
| Sialon | DE-A-23 00 547, |

auf die hier ausdrücklich Bezug genommen wird.

Die Erfindung wird anhand der Zeichnungen näher erläutert, wobei der Gegenstand der Erfindung nicht auf die in den Zeichnungen dargestellten Ausführungen beschränkt ist.

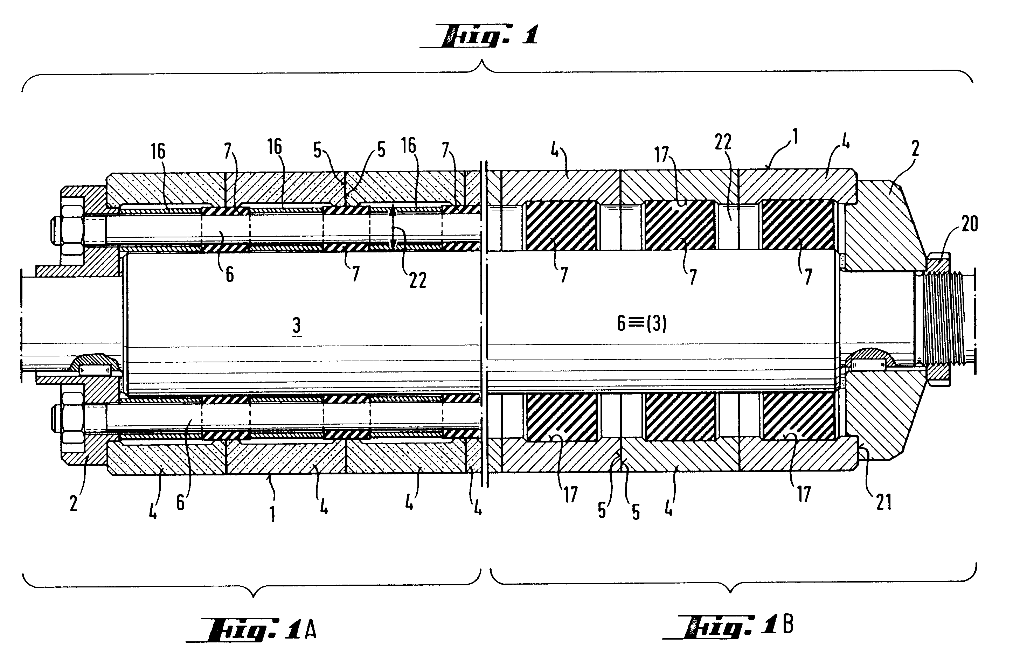

Fig. 1 zeigt links, Fig. 1A, eine erfindungsgemäße Walze im Teillängsschnitt. Dabei wird der Walzenmantel (1) durch die einzelnen Keramikringe (4) gebildet, die mit ihren Stirnflächen (5) aneinander liegen und mittels der beiden Walzenflansche (2), die kraft- und formschlüssig mit der Walzenachse (3) verbunden sind, zusammengehalten werden. Zwischen der Walzenachse (3) und den Ringen (4) befinden sich die elastischen Zentriermittel (7).

Im rechten Teil der Fig. 1, Fig. 1B, ist die Walzenachse (3) zugleich als Zuganker (6) ausgebildet. Zum Aufbringen der notwendigen Vorspannkraft kann der Walzenflansch (2) mittels einer Nutmutter (20) in üblicher Weise an die Walzenstirnfläche (21) angepreßt werden. Zwischen jedem Ring (4) und der Walzenachse (3) sind die elastischen Zentriermittel (7) angebracht, die in Ausnehmungen (17), die als umlaufende Nuten in der inneren Mantelfläche des Ringes (4) ausgebildet sind, eingreifen.

Im linken Teil der Fig. 1, Fig. 1A, ist die Walzenachse (3) zugentlastet. Die Vorspannung des Walzenmantels (1) wird mit den axial und insgesamt konzentrisch angeordneten Zugankern (6) bewirkt. Diese sind in den Walzenflanschen (2) verankert und im Ringraum (22) zwischen Walzenachse (3) und Walzenmantel (1) angeordnet. Die Zuganker (6) tragen die als elastische Büchsen bzw. Ringfedern ausgebildeten Zentriermittel (7). Die Zentriermittel selbst überdecken den Stoß zwischen zwei Stirnflächen (5) der Ringe (4) und übertragen die auf den Walzenmantel (1) einwirkende Linienkraft auf die Walzenachse (3). Zwischen den Zentriermitteln können zur Lagesicherung Abstandsbüchsen (16) vorgesehen werden.

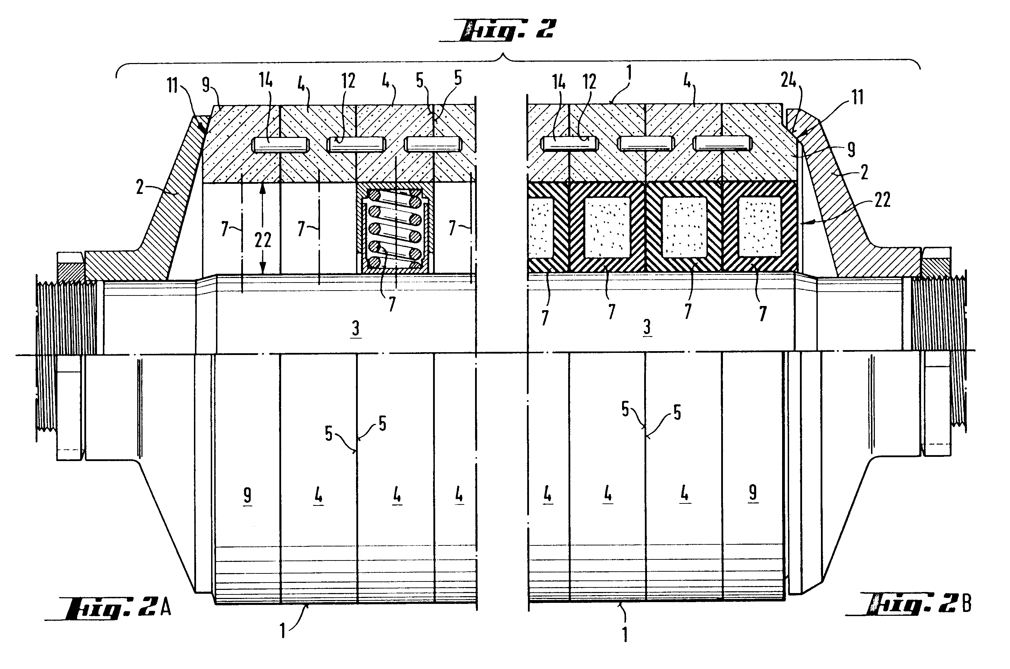

Fig. 2, A und B, zeigt den Aufbau einer Walze mit den als Tellerfedern ausgebildeten Walzenflanschen (2). Diese stehen kraftschlüssig mit den äußeren Stirnseiten (11) des Walzenmantels (1) in Verbindung und weisen eine kegelige Form auf. Diese ist auf der linken Seite, Fig. 2A, ohne Stufe ausgeführt, während auf der rechten Seite (Fig. 2B) eine Stufe (24) am Außenring (9) vorgesehen ist, die vom Walzenflansch (2) übergriffen wird. Diese Anordnung stellt die sogenannte Außenzentrierung dar. Die einzelnen Keramikringe (4) weisen über dem Umfang verteilte Sacklöcher (12) auf, in denen Sprengstifte oder Spannhülsen (14) nach DIN 7346 zur Verbindung und Zentrierung der einzelnen Ringe (4) eingesetzt sind. Im Ringraum (22) zwischen Walzenachse (3) und Walzenmantel (2) sind die elastischen Zentriermittel (7) angedeutet, die z. B. als Spiralfedern bzw. als gummielastischer Block oder Ring ausgebildet sein können. Bei dem auf der rechten Walzenseite dargestellten gummielastischen Ring ist dieser als Schlauch dargestellt, der mit einem kompressiblen Medium wie Luft gefüllt ist.

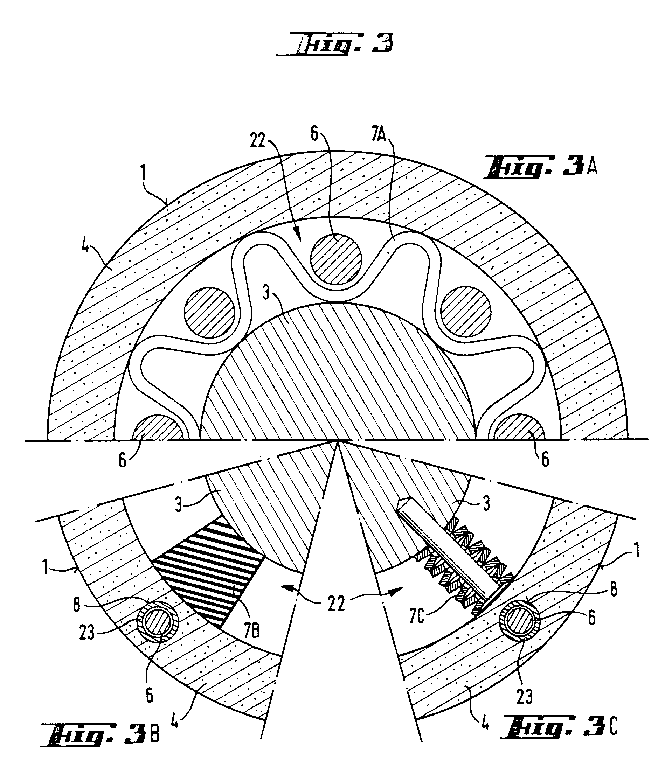

Fig. 3 zeigt einen Querschnitt durch die erfindungsgemäße Walze. Im oberen Teil, Fig. 3A, sind die Zuganker (6) wiederum im Ringraum (22) zwischen Walzenmantel (1) und Walzenachse (3) angeordnet. Zusätzlich ist hier das elastische Zentriermittel (7A) als gewellte Ringfeder vorgesehen. Diese kann in die in Fig. 1B gezeigte Ausnehmung (17) des Ringes (4) eingreifen, sie kann aber auch so angeordnet werden, daß sie die Stöße (5/5) zwischen zwei Ringen (4) überbrückt.

Im unteren linken und rechten Teil der Fig. 3B, Fig. 3C, sind die Ringe (4) des Walzenmantels (1) mit über den Umfang gleichmäßig verteilten Bohrungen (8) mit in diese eingesetzten Spannhülsen (23) versehen, die von Zugankern (6) durchsetzt werden. Im Ringraum (22) zwischen Walzenmantel (1) und Walzenachse (3) sind die elastischen Zentriermittel im linken Sektor (Fig. 3B) als gummielastischer Block 7B und im rechten Sektor (Fig. 3C) als Tellerfederpaket 7C dargestellt. Diese Zentriermittel (7B, 7C) werden selbstverständlich über den gesamten Umfang gleichmäßig verteilt angeordnet.

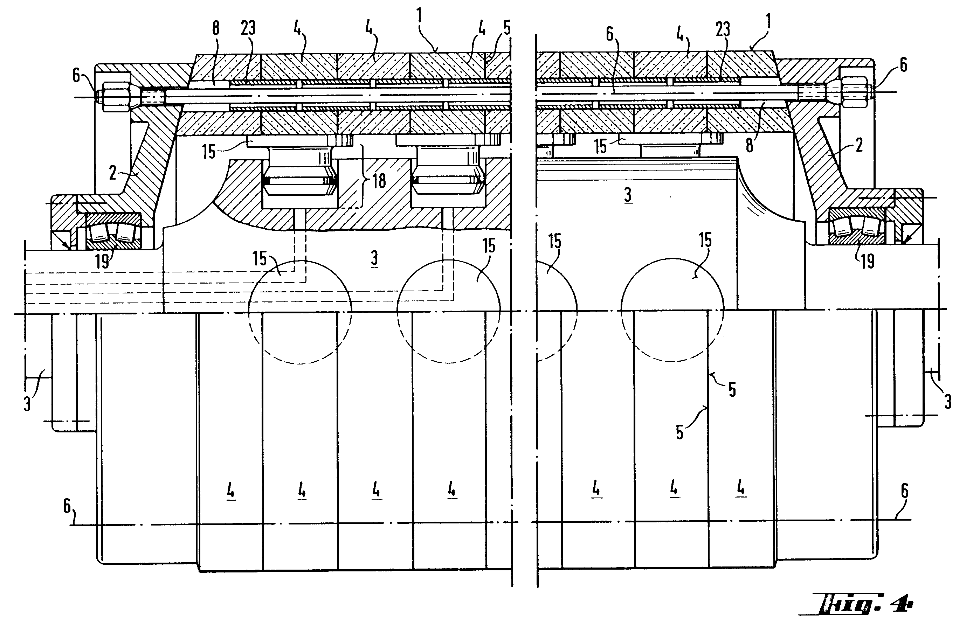

Fig. 4 zeigt eine weitere Ausgestaltung der erfindungsgemäßen Walze. Hier ist die Walzenachse (3) fest gelagert und trägt über die Länge verteilt hydraulisch oder pneumatisch betätigte, sogenannte nachgiebige Stützkolbenelemente (18), die über den Umfang und die Länge verteilt sind und vorzugsweise an der Stelle angeordnet werden, an der eine Linienkraft von außen auf den Walzenmantel (1) einwirkt. Die Stützkolbenelemente (18) sind an ihren dem inneren Walzenmantel anliegenden Seiten mit Gleitschuhen (15) versehen, die gegen die innere geschliffene und polierte Walzenmantelseite angepreßt werden. Zwischen Gleitschuh (15) und Walzenmantel (1) befindet sich ein an sich bekanntes tragendes Ölpolster. Der Walzenmantel (1) selbst ist mittels an den Walzenflanschen (2) angeordneten Pendelrollenlagern (19) auf der feststehenden Walzenachse (3) drehbar gelagert. Die einzelnen Ringe (4) werden mit in Bohrungen (8) angeordneten Spannhülsen (23) miteinander verbunden und mittels diesen mit Spiel durchsetzenden Zugankern (6) mit den Walzenflanschen (3) kraft- und formschlüssig unter Anwendung einer Vorspannung verbunden.

## Patentansprüche

1. Walze für die Druckbehandlung von Warenbahnen, insbesondere Walze, wie Preß- oder Kalanderwalze für die Behandlung von Papier-, Karton- und Pappebahnen in Maschinen der Papierindustrie, die im wesentlichen einen Walzenmantel, Walzenflansche und eine Walzenachse umfaßt, gekennzeichnet durch die Kombination folgender Merkmale:
a) der Walzenmantel (1) besteht aus einzelnen, nebeneinander angeordneten Ringen (4) aus gesinterter Keramik,
b) die Ringe (4) sind durch ein oder mehrere elastische, axiale oder koaxiale Spannmittel (6, 3, 2) miteinander kraftschlüssig verspannt,
c) die Ringe (4) sind mittels elastischer oder nachgiebiger Zentriermittel (7, 18) auf der Walzenachse (3) konzentrisch ausgerichtet.

2. Walze nach Anspruch 1, dadurch gekennzeichnet, daß der Mittenrauhwert Rₐ des durch die Ringe (4) gebildeten Walzenmantels (1) einen Wert zwischen 0,01 und 1,0 µm, insbesondere kleiner 0,05 µm, und eine Rauhtiefe Rₜ kleiner 1 µm aufweist.

3. Walze nach einem der Ansprüche 1 und 2, dadurch gekennzeichnet, daß die Stirnflächen (5) der Ringe (4) einen Mittenrauhwert Rₐ gleich oder kleiner 0,5 µm und eine Ebenheit von weniger als 2 Lichtbanden aufweisen.

4. Walze nach einem der Ansprüche 1 bis 3, dadurch gekennzeichnet, daß die Abweichung der Parallelität der Stirnflächen (5) der Ringe (4) kleiner als 0,01 µm auf 1.000 µm Meßstrecke ist.

5. Walze nach einem der Ansprüche 1 bis 4, dadurch gekennzeichnet, daß das elastische axiale/koaxiale Spannmittel durch mindestens einen Zuganker (6) gebildet wird.

6. Walze nach einem der Ansprüche 1 bis 5, dadurch gekennzeichnet, daß das elastische axiale Spannmittel durch die Walzenachse (3) gebildet wird.

7. Walze nach einem der Ansprüche 1 bis 5, dadurch gekennzeichnet, daß das elastische Spannmittel durch mehrere zur Walzenachse (3) koaxial angeordnete und mit den Walzenflanschen (2) kraftschlüssig verbundene Zuganker (6) gebildet wird.

8. Walze nach einem der Ansprüche 1 bis 4, dadurch gekennzeichnet, daß das elastische axiale Spannmittel durch die als Tellerfedern ausgeführten Walzenflansche (2) gebildet wird.

9. Walze nach einem der Ansprüche 1 bis 4, dadurch gekennzeichnet, daß die elastischen Zentriermittel aus radial angeordneten Metallfedern (7) gebildet werden.

10. Walze nach einem der Ansprüche 1 bis 4, dadurch gekennzeichnet, daß die elastischen Zentriermittel aus gummielastischen Werkstoffen gebildet werden.

11. Walze nach einem der Ansprüche 1 bis 4, dadurch gekennzeichnet, daß die elastischen Zentriermittel aus radial angeordneten, pneumatisch oder hydraulisch beaufschlagten Stützelementen (18) gebildet werden.

12. Walze nach einem der Ansprüche 1 bis 11, dadurch gekennzeichnet, daß die Ringe (4) mindestens drei über dem Umfang verteilte durchgehende Bohrungen (8) zur Aufnahme von Zugankern (6) aufweisen.

13. Walze nach einem der Ansprüche 1 bis 12, dadurch gekennzeichnet, daß die beiden Außenringe (9) des Walzenmantels (1) an den äußeren Stirnseiten (11) eine Stufe (24) aufweisen.

14. Walze nach einem der Ansprüche 1 bis 13, dadurch gekennzeichnet, daß die Stufen (24) kegelförmig sind.

15. Walze nach einem der Ansprüche 1 bis 14, dadurch gekennzeichnet, daß die äußeren Stirnseiten (11) der Außenringe (9) kegelstumpfförmig gestuft ausgestaltet sind.

16. Walze nach einem der Ansprüche 1 bis 15, dadurch gekennzeichnet, daß die Ringe (4) in den Stirnflächen (5) Bohrungen (8) und/oder Sacklöcher (12) zur Aufnahme von Verbindungsmitteln (14, 23) aufweisen.

17. Walze nach einem der Ansprüche 1 bis 16, dadurch gekennzeichnet, daß die Zuganker (6) durch die Verbindungsmittel (23) mit Spiel hindurchgeführt sind.

18. Walze nach einem der Ansprüche 1 bis 17, dadurch gekennzeichnet, daß die Ringe (4, 9) aus gesinterter Oxidkeramik bestehen.

19. Walze nach einem der Ansprüche 1 bis 18, dadurch gekennzeichnet, daß die Oxidkeramik aus Aluminiumoxid mit üblichen Sinterhilfsmitteln, Zirkonoxid, teil- oder vollstabilisiertem Zirkonoxid oder aus mit Zirkonoxid verstärktem Aluminiumoxid besteht.

20. Walze nach einem der Ansprüche 1 bis 17, dadurch gekennzeichnet, daß die Ringe (4, 9) aus nichtoxidischer, gesinterter Keramik bestehen.

21. Walze nach einem der Ansprüche 1 bis 17 und 20, dadurch gekennzeichnet, daß die nichtoxidische Keramik aus Siliziumkarbid, Siliziumnitrid, siliziertem Siliziumkarbid oder Sialon besteht.

22. Walze nach einem der Ansprüche 1 bis 4, gekennzeichnet durch die Kombination der Merkmale
a) die Walzenachse (3) ist fest gelagert,
b) an der Walzenachse (3) sind in radialer Richtung nachgiebig steuerbare Zentriermittel (18) befestigt,
c) die Zentriermittel (18) werden pneumatisch und/oder hydraulisch betätigt,
d) die Zentriermittel (18) sind an ihren dem Walzenmantel (1) zugekehrten Ende mit Gleitschuhen (15) versehen,
e) auf den Gleitschuhen (15) ist der Walzenmantel (1) frei rotierbar gelagert, wobei
e1) der Walzenmantel (1) aus allseitig geschliffenen und polierten Ringen (4) aus Keramik besteht und
e2) die Ringe von mindestens drei über den Umfang verteilten Zugankern (6) durchsetzt werden und
e3) mit den Walzenflanschen (2) kraft- und formschlüssig verbunden sind, und
e4) wobei mindestens an einem Walzenende eine Vorrichtung zum Antrieb des Walzenmantels (1) angeordnet ist.

## Claims

1. Roller for the pressure treatment of product webs, especially a roller, such as a press roller or calender roller for the treatment of paper, cardboard and paperboard in machines of the paper industry, that substantially comprises a roller shell, roller flanges and a roller shaft, characterised by the combination of the following features:
a) the roller shell (1) consists of individual rings (4) of sintered ceramics arranged side by side,
b) the rings (4) are braced together non-positively by one or more elastic axial or coaxial bracing means (6, 3, 2),
c) the rings (4) are aligned concentrically with the roller shaft (3) by means of elastic or non-rigid centering means (7, 18).

2. Roller according to claim 1, characterised in that the average roughness Rₐ of the roller shell (1) formed by the rings (4) has a value of from 0.01 to 1.0 µm, especially less than 0.05 µm, and a roughness depth Rₜ of less than 1 µm.

3. Roller according to one of claims 1 and 2, characterised in that the faces (5) of the rings (4) have an average roughness value Rₐ that is equal to or less than 0.5 µm and an evenness of less than 2 light bands.

4. Roller according to any one of claims 1 to 3, characterised in that the deviation from parallelism of the faces (5) of the rings (4) is less than 0.01 µm over a measured length of 1000 µm.

5. Roller according to any one of claims 1 to 4, characterised in that the elastic axial/coaxial bracing means are formed by at least one tie rod (6).

6. Roller according to any one of claims 1 to 5, characterised in that the elastic axial bracing means are formed by the roller shaft (3).

7. Roller according to any one of claims 1 to 5, characterised in that the elastic bracing means are formed by a plurality of tie rods (6) arranged coaxially with the roller shaft (3) and non-positively connected to the roller flanges (2).

8. Roller according to any one of claims 1 to 4, characterised in that the elastic axial bracing means are formed by the roller flanges (2) constructed as disk springs.

9. Roller according to any one of claims 1 to 4, characterised in that the elastic centering means are composed of radially arranged metal springs (7).

10. Roller according to any one of claims 1 to 4, characterised in that the elastic centering means are composed of rubber materials.

11. Roller according to any one of claims 1 to 4, characterised in that the elastic centering means are composed of radially arranged, pneumatically or hydraulically operated supporting elements (18).

12. Roller according to any one of claims 1 to 11, characterised in that the rings (4) have at least three through-bores (8) distributed over their periphery for receiving tie rods (6).

13. Roller according to any one of claims 1 to 12, characterised in that the two outer rings (9) of the roller shell (1) have a step (24) on their external faces (11).

14. Roller according to any one of claims 1 to 13, characterised in that the steps (24) are conical.

15. Roller according to any one of claims 1 to 14, characterised in that the external faces (11) of the outer rings (9) have a frustoconically stepped configuration.

16. Roller according to any one of claims 1 to 15, characterised in that the rings (4) have in their faces (5) bores (8) and/or blind bores (12) for receiving connection means (14, 23).

17. Roller according to any one of claims 1 to 16, characterised in that the tie rods (6) are passed through the connection means (23) with clearance.

18. Roller according to any one of claims 1 to 17, characterised in that the rings (4, 9) consist of sintered oxide ceramics.

19. Roller according to any one of claims 1 to 18, characterised in that the oxide ceramics consists of aluminium oxide with customary sintering auxiliaries, zirconium oxide, partially or completely stabilised zirconium oxide or of zirconium oxide-reinforced aluminium oxide.

20. Roller according to any one of claims 1 to 17, characterised in that the rings (4, 9) consist of nonoxidic sintered ceramics.

21. Roller according to any one of claims 1 to 17 and 20, characterised in that the non-oxidic ceramics consist of silicon carbide, silicon nitride, silicated silicon carbide or sialon.

22. Roller according to any one of claims 1 to 4, characterised by the combination of the features
a) the roller shaft (3) is mounted in stationary manner,
b) centering means (18) that can be flexibly controlled in the radial direction are fastened to the roller shaft (3),
c) the centering means (18) are actuated pneumatically and/or hydraulically,
d) the centering means (18) are provided with sliding blocks (15) at their ends towards the roller shell (1),
e) the roller shell (1) is mounted to be freely rotatable on the sliding blocks (15), wherein
e1) the roller shell (1) consists of rings (4) of ceramics that have been ground and polished on all sides,
e2) the rings are penetrated by at least three tie rods (6) distributed over their periphery and
e3) are connected to the roller flanges (2) non-positively and positively, and
e4) wherein a device for driving the roller shell (1) is arranged at at least one end of the roller.

## Revendications

1. Rouleau pour le traitement de matériaux en bandes par application de pression, en particulier rouleau tel que rouleau de presse ou de calandre pour le traitement de bandes de papier, de carton mince et autre carton dans des machines pour l'industrie papetière, comprenant une enveloppe de rouleau, des flasques et un axe de rouleau, caractérisé par la combinaison des caractéristiques suivantes:
a) l'enveloppe de rouleau (1) est formée d'anneaux (4) indépendants de céramique frittée, disposés les uns à côté des autres,
b) les anneaux (4) sont assemblés par force et adhérence à l'aide d'un ou plusieurs moyens de serrage (6, 3, 2) élastiques, axiaux ou coaxiaux,
c) les anneaux (4) sont alignés sur l'axe (3) du rouleau de manière concentrique à celui-ci par des moyens de centrage (7, 18) élastiques ou souples.

2. Rouleau selon la revendication 1, caractérisé par le fait que la rugosité moyenne arithmétique Rₐ de l'enveloppe (1) de rouleau formée par les anneaux (4) est comprise entre 0,01 et 1,0 µm, notamment est inférieure à 0,05 µm, et que la profondeur de rugosité Rₜ est inférieure à 1 µm.

3. Rouleau selon l'une des revendications 1 et 2, caractérisé par le fait que les faces frontales (5) des anneaux (4) présentent une rugosité moyenne arithmétique Rₐ égale ou inférieure à 0,5 µm et une planéité inférieure à deux rais de lumière.

4. Rouleau selon l'une des revendications 1 à 3, caractérisé par le fait que l'écart de parallélisme des faces frontales (5) des anneaux (4) est inférieur à 0,01 µm pour une longueur de mesure de 1000 µm.

5. Rouleau selon l'une des revendications 1 à 4, caractérisé par le fait que le moyen de serrage axial/coaxial élastique est constitué par au moins un tirant (6).

6. Rouleau selon l'une des revendications 1 à 5, caractérisé par le fait que le moyen de serrage axial élastique est constitué par l'axe (3) du rouleau.

7. Rouleau selon l'une des revendications 1 à 5, caractérisé par le fait que le moyen de serrage élastique est constitué par plusieurs tirants (6) disposés coaxialement à l'axe (3) du rouleau et liés par force et adhérence aux flasques (2) du rouleau.

8. Rouleau selon l'une des revendications 1 à 4, caractérisé par le fait que le moyen de serrage axial élastique est constitué par les flasques (2) du rouleau agencés sous forme de rondelles ressorts.

9. Rouleau selon l'une des revendications 1 à 4, caractérisé par le fait que les moyens de centrage élastiques sont constitués par des ressorts (7) métalliques disposés radialement.

10. Rouleau selon l'une des revendications 1 à 4, caractérisé par le fait que les moyens de centrage élastiques sont constitués par des matériaux présentant l'élasticité du caoutchouc.

11. Rouleau selon l'une des revendications 1 à 4, caractérisé par le fait que les moyens de centrage élastiques sont constitués par des éléments d'appui (18) disposés radialement et soumis à une pression pneumatique ou hydraulique.

12. Rouleau selon l'une des revendications 1 à 11, caractérisé par le fait que les anneaux (4) comportent au moins trois perçages (8) débouchants répartis sur la circonférence destinés à recevoir des tirants (6).

13. Rouleau selon l'une des revendications 1 à 12, caractérisé par le fait que les deux anneaux (9) extérieurs de l'enveloppe (1) du rouleau présentent un gradin (24) sur leur face frontale (11) extérieure.

14. Rouleau selon l'une des revendications 1 à 13, caractérisé par le fait que les gradins (24) sont coniques.

15. Rouleau selon l'une des revendications 1 à 14, caractérisé par le fait que les faces frontales (11) extérieures des anneaux (9) extérieurs sont étagées en tronc de cône.

16. Rouleau selon l'une des revendications 1 à 15, caractérisé par le fait que les deux anneaux (4) présentent au niveau de leurs faces frontales (5) des perçages (8) et/ou des trous borgnes (12) destinés à recevoir des moyens d'assemblage (14, 23).

17. Rouleau selon l'une des revendications 1 à 16, caractérisé par le fait que les tirants (6) traversent avec jeu les moyens d'assemblage (23).

18. Rouleau selon l'une des revendications 1 à 17, caractérisé par le fait que les anneaux (4, 9) sont en céramique oxydée frittée.

19. Rouleau selon l'une des revendications 1 à 18, caractérisé par le fait que la céramique oxydée est composée d'oxyde d'aluminium contenant des adjuvants de frittage habituels, d'oxyde de zirconium, d'oxyde de zirconium partiellement ou totalement stabilisée ou d'aluminium renforcé avec de l'oxyde de zirconium.

20. Rouleau selon l'une des revendications 1 à 17, caractérisé par le fait que les anneaux (4, 9) sont en céramique frittée non oxydée.

21. Rouleau selon l'une des revendications 1 à 17 et 20, caractérisé par le fait que la céramique non oxydée est composée de carbure de silicium, de nitrure de silicium, de carbure de silicium enrichi en silicium ou de sialon.

22. Rouleau selon l'une des revendications 1 à 4, caractérisé par la combinaison des caractéristiques:
a) l'axe (3) du rouleau est monté fixe,
b) sur l'axe (3) du rouleau sont fixés des moyens de centrage (18) commandés élastiques dans la direction radiale,
c) les moyens de centrage (18) sont actionnés pneumatiquement et/ou hydrauliquement,
d) à leur extrémité tournée vers l'enveloppe (1) du rouleau, les moyens de centrage (18) sont pourvus de patins (15),
e) l'enveloppe (1) du rouleau est montée libre en rotation sur les patins (15),
e1) l'enveloppe (1) du rouleau étant formée d'anneaux (4) de céramique rectifiés et polis sur toutes leurs faces et
e2) les anneaux étant traversés par au moins trois tirants (6) répartis sur la circonférence et
e3) liés par adhérence et par obstacle aux flasques (2) de rouleau et
e4) un dispositif pour l'entraînement de l'enveloppe (1) du rouleau étant disposé en au moins une extrémité dudit rouleau.
